# EUROPEAN PATENT APPLICATION

(11) **EP 4 472 164 A1**
(43) Date of publication of application: **04.12.2024**
(21) Application number: 23176425.9
(22) Date of filing: 31.05.2023
(51) Int. Cl.: H04L 45/12, H04L 45/128, H04L 45/00

(54) **RESILIENT NETWORK ROUTING**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A method for determining resilient routing in a network comprising a plurality of nodes and a plurality of links between the nodes, the plurality of nodes and the plurality of links arranged in two or more Shared Risk Groups, SRGs, the plurality of nodes comprising exactly one source node and one or more destination nodes, is disclosed. The method comprises determining a first initial graph of the network; determining a second initial graph of the network; and iteratively adjusting the first initial graph and/or the second initial graph, by selecting a graph operation from a list of graph operations and applying the graph operation, so as to generate a first final graph and a second final graph such that, for each destination node, a path from the source node to the destination node in the first final graph and a path from the source node to the destination node in the second final graph comprise a minimum number of nodes and links within the same SRG. Each graph comprises all of the nodes of the network and comprises edges along a subset of the links of the network such that, for each graph, there is exactly one path from the source node to any other node. A corresponding computing system, non-transitory medium, and network are provided.

## Description

### TECHNICAL FIELD

The present invention relates to network routing. In particular, the present invention relates to methods for resilient routing through a network, as well as corresponding computing systems, non-transitory mediums, and networks.

### BACKGROUND

A telecommunications network consists of a number of nodes, interconnected by a number of links. The nodes are electronic switches, and the links are electrical or optical cables. At each node, data transmitted through the network can be switched to any one of the available outgoing links. The nodes and links are characterized by properties including potential bandwidth, available bandwidth, cost, distance, latency and others. Service-providers provide services over the network involving the transmission of data. Services are characterised by properties such as required bandwidth, required reliability and cost. A route through the network is valid for a service if it can support that service, and optimal if it minimises or maximises some desired property or properties such as cost, bandwidth, latency and so forth.

A resilient point-to-multipoint service such as the broadcast of video provides at least two alternative routes from a source to each of a number of destinations. This duplication provides resilience to failure; if one route becomes unusable due to the failure of a node or link, the other route can be used instead.

Certain types of failure may affect multiple routes. For example, if an exchange building is destroyed by fire, all the nodes within the building will be destroyed, even though they may have no common links. The nodes and links of the network can be grouped into Shared Risk Groups (SRGs) such that a failure of any member of the group implies failure of the whole group.

In order to meet contractual requirements, service providers need to identify two distinct valid routes from source to each destination, taking SRGs into account. Furthermore, they should do so at minimum cost (where cost is some combination of properties such as rental cost, bandwidth, latency etc). A further technical constraint is that if one route to each destination is labelled A and the other B, then after two A or two B routes have split along different paths, they cannot remerge. Another way of saying this is that the A routes taken together must form a tree, and similarly for the B routes.

The point-to-multipoint resilient routing with Shared Risk Groups (SRGs) problem is a common and hard problem in telecommunications networks. The task is to find two routes through a network from a single source to each of a number of destinations such that (i) the two routes to any given destination share no links or nodes in the same SRG, and that (ii) the two sets of routes from source to each destination form distinct trees, that is, no node in the solution may have more than one "parent".

Heuristic searching is a general technique for finding solutions to a problem with many different possible solutions, where no deterministic algorithm (i.e., analytical solution) is known. Heuristic searching proceeds from a poor, or even invalid, solution and makes incremental improvements in order to reach a better solution.

A number of algorithms have been devised to solve this problem, however, there is no algorithm that is guaranteed to find the most optimal solution, or even a valid solution even if one exists.

### SUMMARY OF INVENTION

The invention is defined in the independent claims. Embodiments of the invention are set out in the dependent claims.

According to a first aspect of the present disclosure, a method for determining resilient routing in a network comprising a plurality of nodes and a plurality of links between the nodes, the plurality of nodes and the plurality of links arranged in two or more Shared Risk Groups, SRGs, the plurality of nodes comprising exactly one source node and one or more destination nodes is provided. The method comprises determining a first initial graph of the network; determining a second initial graph of the network; and iteratively adjusting the first initial graph and/or the second initial graph, by selecting a graph operation from a list of graph operations and applying the graph operation, so as to generate a first final graph and a second final graph such that, for each destination node, a path from the source node to the destination node in the first final graph and a path from the source node to the destination node in the second final graph comprise a minimum number of nodes and links within the same SRG. Each graph comprises all of the nodes of the network and comprises edges along a subset of the links of the network such that, for each graph, there is exactly one path from the source node to any other node.

In some examples, the method relates to a network having exactly one source node and two or more destination nodes.

In some examples, each node and/or link has an associated cost.

In some examples, the list of graph operations comprises a first operation. The first operation comprises the following steps: selecting a first node, wherein the first node is the source node; selecting a second node, wherein the second node is a destination node; defining one or more undesired nodes and/or links and assigning these a high cost, wherein an undesired node or link is a node or link respectively that is on a path from the source node to the destination node in the first graph that is in the same SRG as a node or a link on a path from the source node to the destination node in the second graph; determining a minimum cost path between the first node and the second node through the network; and updating the graph to comprise the minimum cost path.

In some examples, the first operation further comprises defining one or more desired nodes and/or links and assigning these a low cost.

In some examples, the second node is selected such that there is at least one node and/or link on a path from the source node to the second node in the first graph that is in the same SRG as a node or a link on a path from the source node to the second node in the second graph.

In some examples, the list of graph operations comprises a second operation. The second operation comprises the following steps: selecting a first node, wherein the first node is a node that is connected to an undesired node via an edge or that is connected to an undesired link; selecting a second node, wherein the second node is a destination node; defining one or more undesired nodes and assigning these a high cost; determining a minimum cost path between the first node and the second node through the network; and updating the graph to comprise the minimum cost path. An undesired node or link is a node or link respectively on a path from the source node to the destination node in the first graph that is in the same SRG as a node or a link on a path from the source node to the destination node in the second graph.

In some examples, the second operation further comprises defining one or more desired nodes and/or links and assigning these a low cost.

In some examples, the first node and the second node are selected such that there is at least one node and/or link on a path from the source node to the second node in the first graph that is in the same SRG as a node or a link on a path from the source node to the second node in the second graph.

In some examples, the list of graph operations comprises a third operation. The third operation comprises: selecting a first node, the first node being linked to at least a second node and a third node in the network; and adjusting an edge of the graph that connects the first node with the second node so as to connect the first node with the third node.

In some examples, the first node is selected randomly.

In some examples, the list of graph operations comprises at least the first operation and the second operation.

In some examples, the list of graph operations comprises at least the first operation, the second operation, and the third operation.

In some examples, each of the first operation, the second operation, and the third operation are performed at least once on either the first graph or the second graph.

According to a second aspect of the present disclosure, a computing system configured to perform the method of the first aspect is provided.

According to a third aspect of the present disclosure, a non-transitory medium that, when implemented on a computing system, causes the computing system to perform the method of any of the first aspect is provided.

According to a fourth aspect of the present disclosure, a network comprising a plurality of nodes and a plurality of links between the nodes, the plurality of nodes and the plurality of links arranged in two or more Shared Risk Groups, SRGs, the plurality of nodes comprising a source node and two or more destination nodes, the network having resilient routing paths determined according to the method of any the first aspect is provided.

### BRIEF DESCRIPTION OF THE DRAWINGS

The disclosure will be further described, by way of example only, with reference to the accompanying drawings, in which:
Figure 1 illustrates a network;
Figure 2 illustrates resilient routing paths through a network;
Figure 3 illustrates single-to-multipoint resilient routing paths through a network;
Figure 4 illustrates a graph of a network;
Figure 5 illustrates network paths along a tree graph of a network;
Figure 6 illustrates a method for determining resilient routing in a network;
Figure 7 illustrates a first graph operation;
Figure 8A illustrates non-resilient routing in a network;
Figure 8B illustrates resilient routing in a network;
Figure 9A illustrates a graph of a network;
Figure 9B illustrates an adjusted graph of a network;
Figure 10 illustrates a second graph operation;
Figure 11 illustrates a third graph operation; and
Figure 12 illustrates a computing system.

### DETAILED DESCRIPTION OF THE INVENTION

Embodiments and related technology helpful for understanding and implementing the embodiments will now be described with reference to the Figures. The same or similar reference numerals are used to refer to the same or similar components across different Figures.

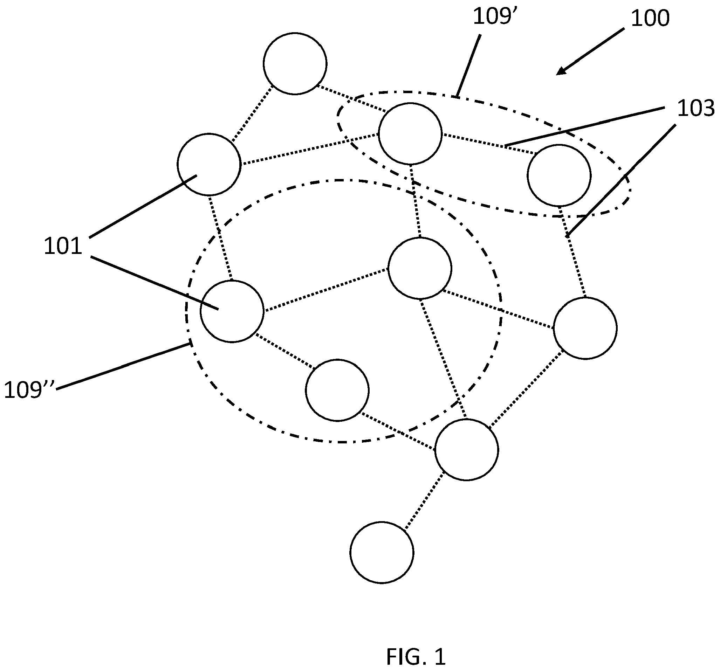

Figure 1 illustrates a network 100 comprising a plurality of nodes 101 connected by links 103. Every node 101 in the network 100 is connected to at least one other node 101 in the network 100 by a link 103. Some nodes 101 are connected to more than one other node 101 in the network 100 by multiple links.

The nodes 101 and links 103 of the network 100 are arranged into a plurality of Shared Risk Groups (SRGs) 109. These SRGs 109 represent nodes 101 that share some common risk, such that if one node 101 or link 103 within an SRG 109 is offline then there is a relatively high likelihood that the other nodes 101 or links 103 within the same SRG 109 will also be offline. Typically, SRGs 109 relate to a physical location, and comprise nodes 101 and links 103 that are co-located. For example, an SRG 109 may comprise all of the nodes 101 physically located within a single building or all of the links 103 carried by cores within a single multicore optical fibre (in each case, regardless of the position of the nodes 101 and links 103 within the network 100). It will be appreciated that in the first case, if something were to cause one node 101 in the building to come offline, such as a fire, there is an elevated risk that the other nodes 101 in the same building will also be taken offline. Similarly, for a multicore optical fibre, if the fibre is accidentally cut then all of the links corresponding to the cores of the fibre will be broken.

Looking at Figure 1, a first SRG 109' is illustrated comprising two nodes 101, and a second SRG 109" is illustrated comprising three nodes 101. Each of the other nodes 101 can be considered to be in their own, unique SRG 109 comprising just that node 101. The first SRG 109' also comprises one link 103 within the SRG 109' entirely (i.e., both nodes 101 to which the link 103 connects are within the SRG 109'), and three links 103 partially within the SRG 109' (i.e., only one of the nodes 101 to which the link 103 connects are within the SRG 109'). When defining the SRGs 109, links 103 partially inside the SRG 109 can be defined as either within the SRG 109 or not. However, in practice, a network path that utilises a link 103 that is partially within an SRG 109 will necessarily include a node 101 within that SRG 109, and so the path will pass through that SRG 109 whether the link 103 is defined as within the SRG 109 or not.

It is often desirable to be able to provide resilient routing within a network 100 - i.e., providing two or more network paths from a first node 101 to a second node 101 that share a minimum number of nodes 101 and links 103 in the same SRG 109. Preferably, each of the two or more paths are independent and share no nodes 101 or links 103 within the same SRG 109 (except for the first node 101 and the second node 101 themselves). If each SRG 109 only comprises a single node 101, then this will simply mean that the two or more paths do not overlap (i.e., have any nodes 101 or links 103 in common, save for the first node 101 and the second node 101). However, when the SRGs comprise a plurality of nodes 101 and links 103, this will mean that a first path having a first node 101 within the path will exclude not just that node 101, but a number of other nodes 101 and links 103 that are within the same SRG from inclusion within a second path.

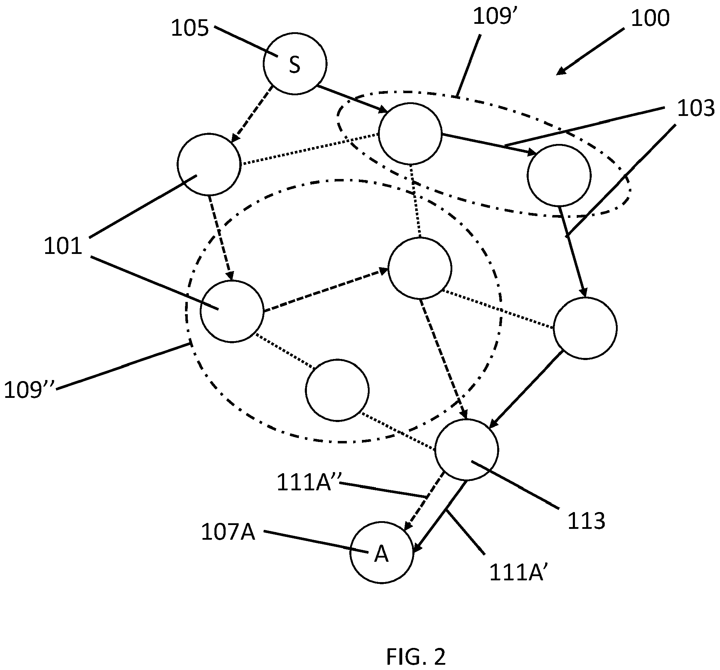

Figure 2 illustrates the concept of resilient routing within a network 100 between a source node 105 (node S) and a destination node 107A (node A). A first path 111 A', represented in Figure 2 by solid arrows, passes from the source node S 105 to the destination node A 107A, passing through a first SRG 109'. A second path 111A", represented in Figure 2 by dashed arrows, passes from the source node S 105 to the destination node B 107A, passing through a second SRG 109". It can be seen that the two paths 111A' and 111A" do not each pass through the same SRG 109 (including passing through the same node 101, outside of the two multi-node SRGs 109', 109"), except for when necessary. In the exemplary network 100 shown in Figure 2, it is necessary for both paths 111A' and 111A" to pass through the same node 113 because this is the only node 101 to which the destination node A 107A is linked. Therefore, the two network paths 111A' and 111A" can be considered to represent resilient routing paths from the source node S 105 to the destination node A 107A.

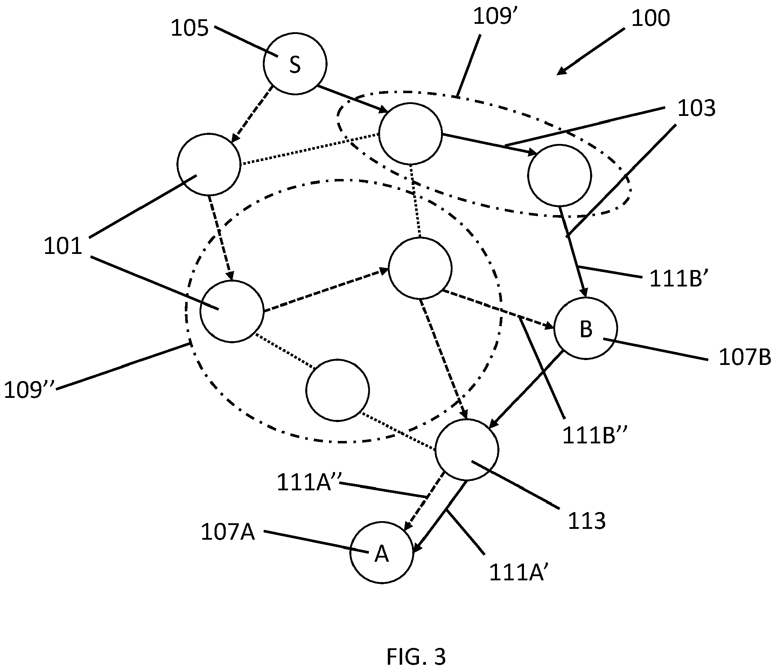

Whilst Figure 2 illustrates two resilient paths through network 100 from a source node S 105 to a single destination node A 107A, in practice it is usually desirable to have resilient paths through a network 100 from a source node S 105 (e.g., a service provider) to multiple destination nodes 107. Figure 3 illustrates an example with two destination nodes A 107A and B 107B.

In Figure 3, a first pair of paths through the network 100 is illustrated by solid arrows. These are path 111A' from the source node S 105 to destination node A 107A, passing through SRG 109', and path 111B' from the source node S 105 to destination node B 107B, also passing through SRG 109'. A second pair of paths through the network 100 is illustrated by dashed arrows. These are path 111A" from the source node S 105 to destination node A 107A, passing through SRG 109", and path 111B" from the source node S 105 to destination node B 107B, also passing through SRG 109". It can be seen that, other than the source node S 105, the destination nodes 107A, 107B themselves, and where a node 113 represents the only way to reach a destination node A 107A, the two paths 111A', 111A" to destination node A 107A comprise no shared nodes 101 or links 103, and neither do the two paths 111B', 111B" to destination node B 107B. It should be noted, however, that it is not a requirement that paths from the source node S 105 to different destination nodes 107A, 107B comprise no, or minimal, shared nodes 101 or links 103. For example, as can be seen looking at Figure 3, the path 111A' from the source node S 105 to destination node A 107A fully comprises path 111B' from the source node S 105 to destination node B 107B.

Another consideration when routing through a network 100 is the cost of the path. The cost of a path through a network 100 is, generally speaking, a way of defining how optimal a path is through the network 100 based on one or more criteria. Factors such as bandwidth, latency, and power consumption of nodes may be factored into the cost, as may be factors such as the length of the path (physical, and/or number of nodes 101 and/or links 103), or capabilities of certain nodes, such as the ability to apply security operations to data. For example, a node 101 that has a high bandwidth may contribute a low amount to the cost of a network path, whereas a node 101 that has a low bandwidth may contribute a high amount to the cost of a network path. Precisely how the cost of a network path is determined will depend upon the particular priorities and needs of the user of the network, but is generally done by summing or otherwise combining the cost of all of the nodes 101 and links 103 within the path. Such techniques are known to the person skilled in the art.

While such single-to-multi-destination routing is commonly desirable, there is no analytical method for determining the optimal paths (i.e., minimum cost and minimum number of nodes and links within the same SRG shared between the two paths to a given destination) through a network 100. The present disclosure, however, provides a number of operations that can be used to determine the optimal paths through a network 100.

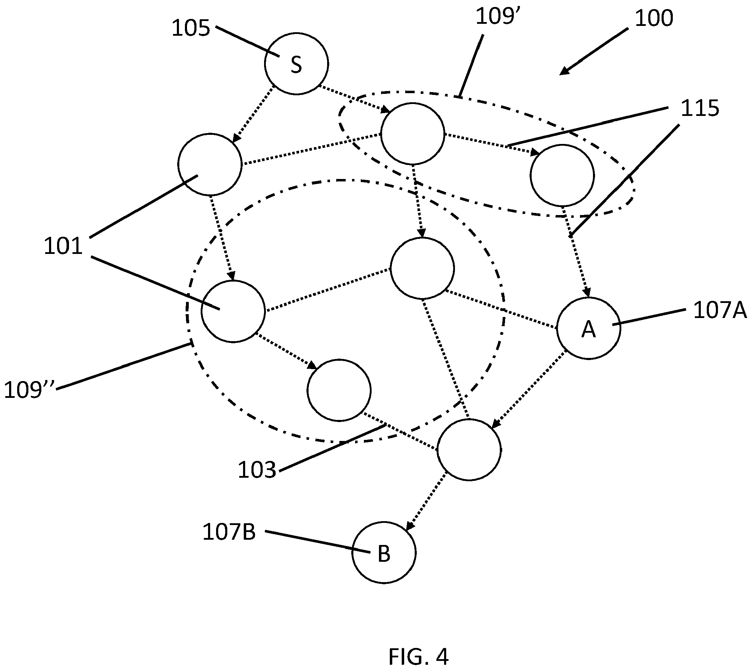

As illustrated in Figure 4, a network 100 can be represented as a graph, with the nodes 101 of the network 100 being the nodes 101 of the graph. In particular, the network 100 can be represented as a tree, a type of graph in which any two nodes 101 are connected by exactly one path, or equivalently a connected acyclic graph. This involves taking a subset of the links 103 of the network 100 as the edges 115 of the graph (represented by the dotted arrows in Figure 4), such that, for every node 101, there is only one path from the source node S 105 to that node 101. While Figure 4 has use arrows to distinguish the edges 115 from the links 103, the graph does not have to be a directed graph. The arrows merely assist in the visualisation of the network with information passing from the source node S 105 to the destination nodes 107A, 107B.

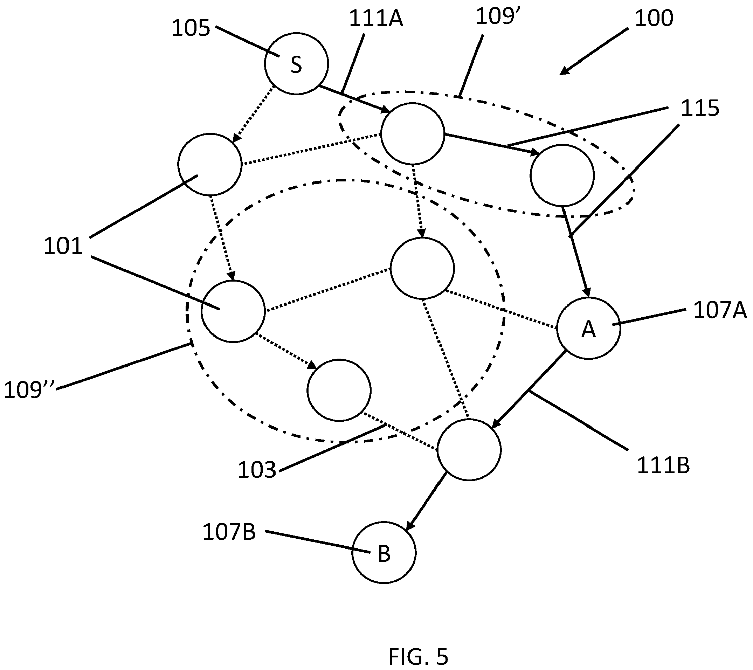

From a graph, such as that illustrated in Figure 4, paths through the network can be determined from the source node S 105 to any given other node 101, such as destination nodes A 107A and B 107B. Indeed, there is precisely one path from the source node S 105 to a given destination node 107A, 107B. Figure 5 illustrates paths 111A and 111B, passing from the source node S 105 to the destination nodes A 107A and B 107B respectively. It will be appreciated that the paths 111 A, 111B follow the edges 115 of the graph.

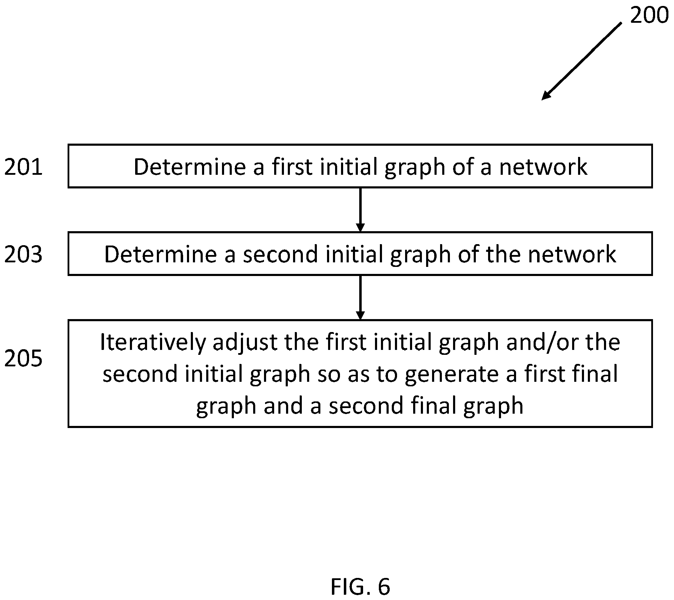

A graph of a network 100 can be modified by altering the edges 115 between the nodes 101. In the present disclosure, all changes to a graph are constrained by two features: (i) that the edges 115 of the new graph must correspond to links 103 of the underlying network 100, and (ii) that the new graph is also a tree (i.e., there is exactly one path from the source node S 105 to every other node 101). By performing operations to alter a graph in an iterative manner, resilient routing paths can bet determined through a network 100. Such a method is illustrated in Figure 6.

Figure 6 is a flow chart of a method 200 for determining resilient routing in a network 100 comprising a plurality of nodes 101 and a plurality of links 103 between the nodes 101 when the plurality of nodes 101 and the plurality of links 103 are arranged in two or more SRGs 109 and when the plurality of nodes 101 comprise a source node 105 and two or more destination nodes 107A, 107B.

The method 200 begins at steps 201 and 203 by determining a first initial graph of the network 100 and a second initial graph of the network 100. As discussed above, both graphs are trees of the network 100. That is, both graphs comprise all of the nodes 101 of the network 100 and comprise edges 115 along a subset of the links 103 of the network 100 such that (within each graph) there is exactly one path from the source node 105 to any other node 101.

Then, at step 205, one or both of the first and second initial graphs are iteratively adjusted so as to generate a first final graph and a second final graph. Again, it is noted that the first final graph and the second final graph are both trees of the network 100, as are each intermediate graph that is generated by the iterative adjustment process. Furthermore, it is noted that the first final graph and the second final graph are generated, through the iterative adjustment process, such that, for each destination node 107A, 107B, a path from the source node 105 to the destination node 107A, 107B in the first final graph and a path from the source node 105 to the same destination node 107A, 107B in the second final graph comprise a minimum number of nodes 101 and links 103 within the same SRG 109. That is, the paths pass through a minimum number of shared SRGs 109. Preferably, there is no overlap in SRGs 109 except where necessary (e.g., as with node 113 in Figure 2).

Furthermore, each node preferably has an associate cost (as discussed above), and the two paths from the source node 105 to the same destination node 107A, 107B also have minimised costs. It is noted that there are different ways to minimise the cost, such as the minimum of the sum of the costs of each path, the minimum value of a single path (disregarding the cost of the other path), a minimum of a weighted average of the cost of the two paths, etc.

Iteratively adjusting the first initial graph and/or the second initial graph comprises selecting a graph operation from a list of graph operations and applying the graph operation. This selection of a graph operation and application of the selected graph operation is repeated iteratively on one or both of the first graph and the second graph until the first final graph and the second final graph are obtained. Each iteration of the selection of a graph operation and application of the selected graph operation may involve selecting a different graph operation or the same graph operation from the list to a previous iteration, and may involve applying the selected operation to a different graph or to the same graph as a previous iteration. For example, a first iteration may involve selecting a first graph operation and applying it to the first initial graph to adjust the first graph, obtaining a first intermediate graph. A second iteration may involve selecting a second graph operation and applying it to the second initial graph to adjust the second graph, obtaining a second intermediate graph. A third iteration may involve selecting the first graph operation again, but this time applying it to the second graph (now the second intermediate graph), to adjust the second intermediate graph and to obtain an updated second intermediate graph. This process is repeated until the first final graph is obtained (by iteratively adjusting the first initial graph) and the second final graph is obtained (by iteratively adjusting the second initial graph). Again, it is emphasised that at each stage (i.e., after each iteration), the resultant graphs are trees of the network. It will be appreciated that in some instances an adjustment of a graph by applying a graph operation may result in the graph not being changed. For example, a graph operation may only conditionally modify the graph, and if this condition is not met the graph operation may return a graph that is identical to the graph prior to the application of the graph operation.

In some cases, the first initial graph and the second initial graph may be identical. Furthermore, in some cases (with identical first and second initial graphs or otherwise), only a single graph may be adjusted through the iterative application of graph operations. For example, in the case of the first and second initial graphs being identical, only the second initial graph my be adjusted through the iterative application of graph operations. In this case, the first final graph will be identical to the first initial graph, though the second final graph will not be the same as the second initial graph.

The iterative adjustment of the graph may continue until one or more criteria are met. The precise criteria used will depend upon the particular implementation requirements. For example, the method may continue until the paths from the source node 105 to each of the destination nodes 107A, 107B in the first graph and the second graph comprise no nodes 101 or links 103 within the same SRG 109, or until a minimum number of nodes 101 and links 103 are within the same SRG 109, taking into account the network topology. Another criteria may be that the method will continue until a certain amount of time has passed or a certain number of iterations of an application of a graph operation have been performed, either in total (on both graphs) or on one or the other of the graphs. Other factors may be taken into account, such as the cost of the paths of the graphs. The criteria may be applied as alternative requirements or as multiple requirements. For example, a criteria may be that the method will continue until resilient paths to each of the destinations have been found and either (i) a certain number of iterations have happened or (ii) each path to a destination has a cost less than a certain value.

A number of possible graph operations are disclosed. It is noted that each graph operation may be applied to either the first initial graph (or a previously adjusted version thereof) or the second initial graph (or a previously adjusted version thereof). Therefore, in the following discussion, references to a graph should be understood to be the graph to which the graph operation is applied to (unless explicitly stated otherwise), which may be the first graph or the second graph.

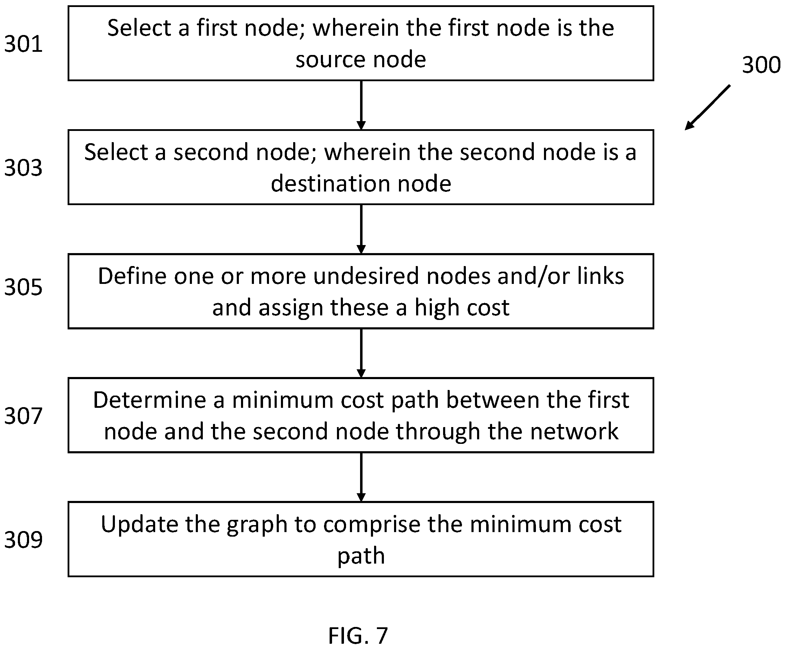

A first graph operation 300 is illustrated in the flowchart of Figure 7. The first graph operation 300 begins at step 301 whereby the source node 105 of the graph is selected as a first node of the graph. At step 303, a destination node 107 of the graph is selected as a second node of the graph.

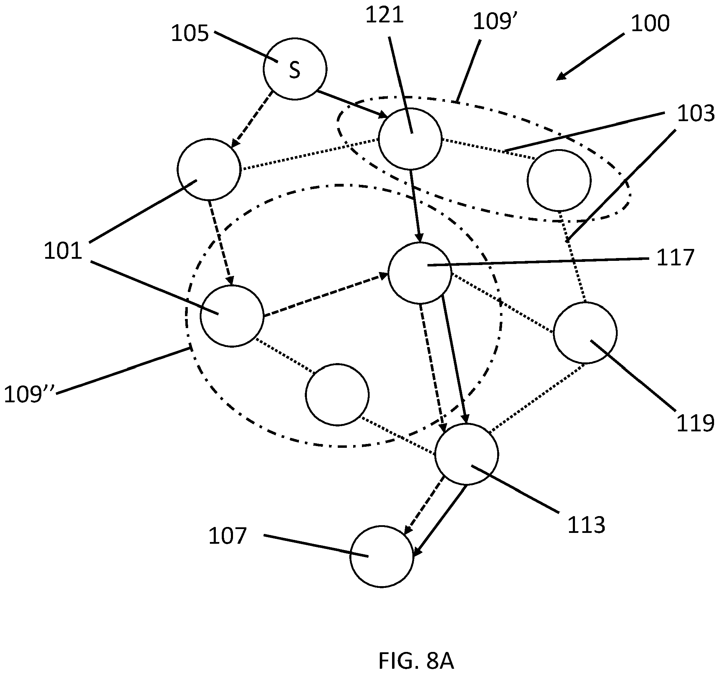

At step 305, one or more undesired nodes and/or links are selected and assigned a high cost. It will be appreciated that only nodes, only links, or a combination of nodes and links can be defined as undesired nodes. An undesired node 113, 117 or link is a node 101 or link 103 respectively that is on a path from the source node 105 to a destination node 107 on one of the graphs and in the same SRG 109 as a link 103 or node 101 that is on a path from the source node 105 to the same destination node 107 but in the other graph. That is, an undesired node 113, 117 or link is a node 101 or link 103 respectively that is in a shared SRG 109 between the two paths (defined in the two graphs) from the source node 105 to a destination node 107. Figure 8A illustrates such undesired nodes 113, 117, illustrating the routes from the first node 105 to the second node 107 from the two graphs, superimposed over the network 100 (not the graphs). As can be seen, both paths (solid and dashed arrows) pass through node 117, making node 117 an undesired node. It will also be noted that both paths pass through node 113, which is also an undesirable node.

The undesired nodes 113, 117 or links are assigned a high cost. The precise cost assigned to an undesired node 113, 117 or link generally does not matter, provided the cost is such that the lowest cost route will not include any undesired nodes or links where possible given the network 100 architecture. For example, an undesired node 113, 117 or link may have its base cost multiplied by a factor (such as a factor of 10, 100 or 1,000), or it may be assigned a fixed, high value, such as the average cost of a node or link in the network multiplied by a factor (such as a factor of 10, 100 or 1,000).

Once steps 301, 303 and 305 have been performed (in any order), the method proceeds to step 307 where the minimum cost path between the first (source) node 105 and the second (a destination) node 107 is determined. It is important to note that this path is determined through the network 100, and not the graph (as the graph only contains a single path between the first node 105 and the second node 107). That is, the path may pass through any node 101 or link 103 in the network 100, not just the subset of links 103 that comprise the edges of the graph, so as to provide the lowest cost route between the first node 105 and the second node 107. Due to the high cost of the undesired nodes 113, 117 and/or links, this will result in the path comprising the minimum number of undesired nodes 113, 117 and links.

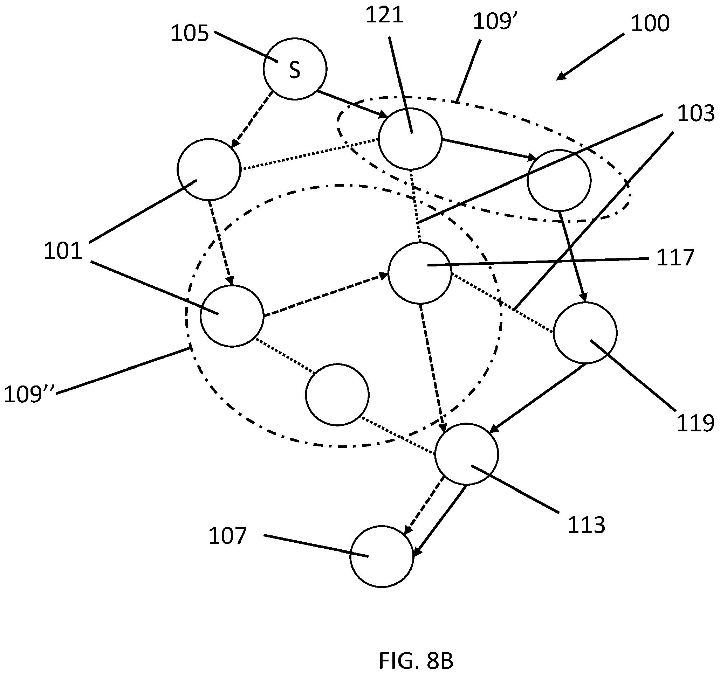

At step 309, the graph is updated to comprise the minimum cost path determined at step 307. Figure 8B illustrates how the path through the network 100 (represented by solid arrows) can be changed to avoid the undesired node 117 to minimise the cost of the path through the network. However, undesired node 113 cannot be avoided as it is the only node connected to the destination node 107. Therefore, despite the undesired node 113 having a high cost, the minimum cost path still passes through it.

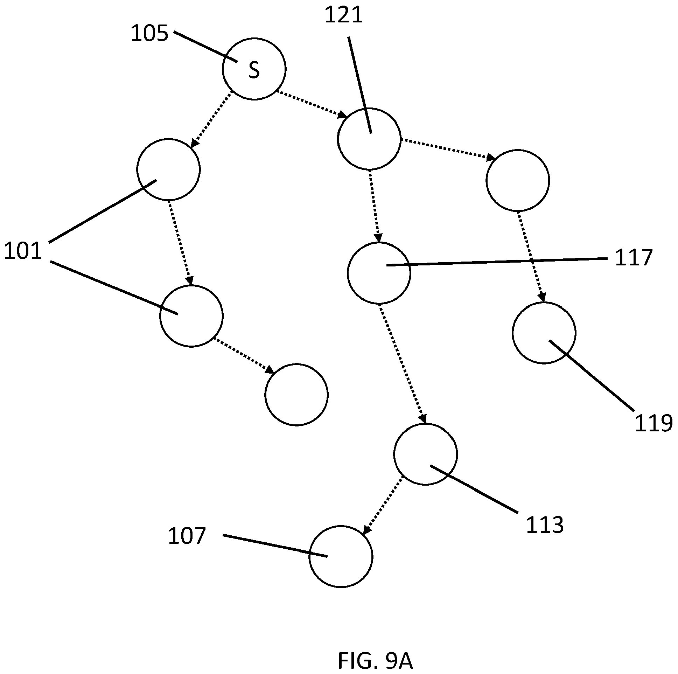

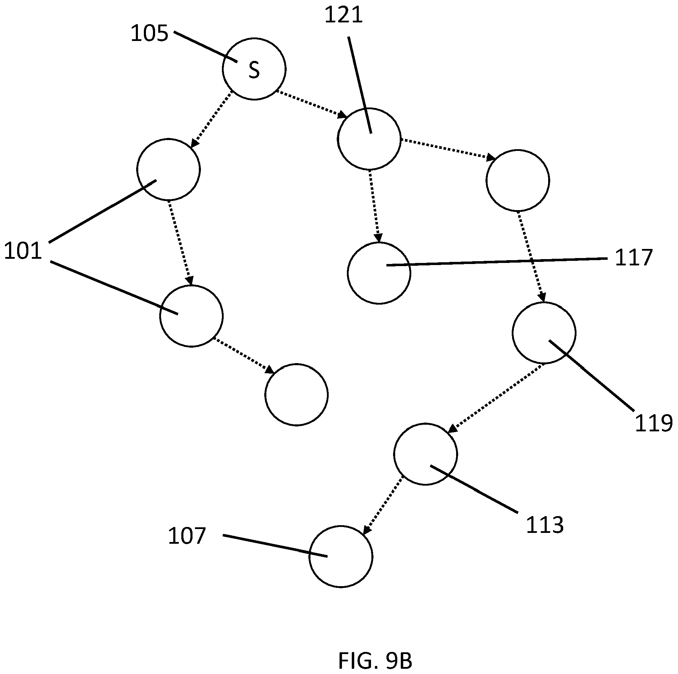

Figure 9A and 9B illustrate the change to the graph. Figure 9A illustrates the graph (a tree) underlying the path illustrated by solid arrows in Figure 8A, and Figure 9B illustrates how this graph is modified to take into account the determined minimum cost path of step 307, shown in Figure 8B. As can be seen, in Figure 9A, node 117 is connected by an edge with node 113. This is modified in Figure 9B so that node 113 is instead connected to node 119. This change is made be modifying the subset of links 103 of the network 100 that comprise edges of the graph, will still ensuring that the graph is a tree of the network 100.

Optionally, prior to step 307 of determining a minimum cost path between the first node 105 and the second node 107, the first graph operation 300 may also comprise a step of determining one or more desired nodes and/or links and assigning these desired nodes and desired links a low cost. This will bias the network 100 so as to prefer the inclusion of these desired nodes and links when determining the lowest cost path. The precise cost assigned to a desired node or link generally does not matter, provided the cost is such that the lowest cost route will include any desired nodes or links where possible given the network 100 architecture. For example, a desired node or link may have its base cost multiplied by a factor (such as a factor of 0.1, 0.01 or 0.001), or it may be assigned a fixed, low value, such as the average cost of a node or link in the network multiplied by a factor (such as a factor of 0.1, 0.01 or 0.001).

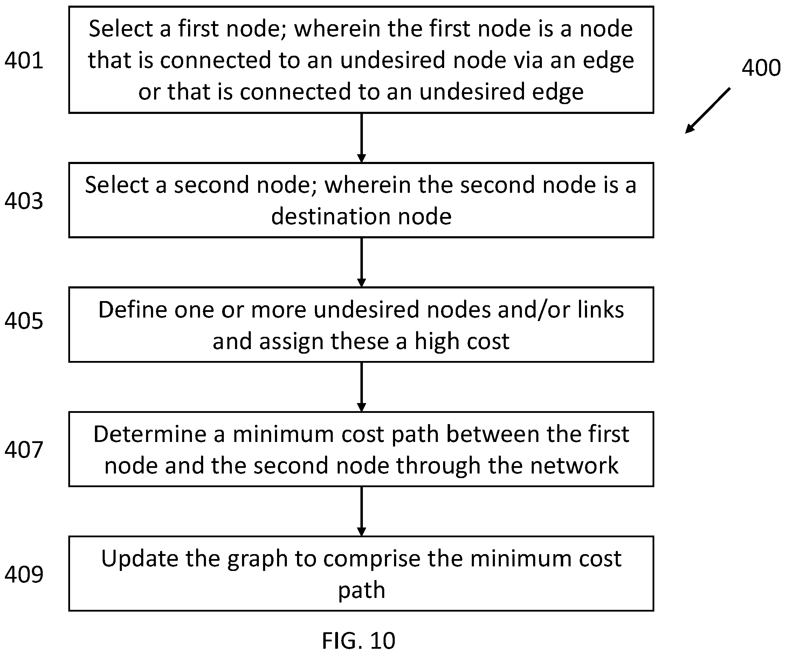

A second graph operation 400 is illustrated by the flowchart in Figure 10. The second graph operation 400 is similar to the first graph operation 300 illustrated in Figure 7, and similar steps will not be described again in detail and reference is made instead to the above discussion.

The second graph operation begins at step 401 at which a first node 121 is selected. Unlike in the first graph operation 300 wherein the first node is the source node 105, in the second graph operation 400 the first node 121 is selected as a node that is adjacent to an undesired node 113, 117 or an undesired edge. That is, the first node 121 is selected so that it is a node 101 that is connected to an undesired node 113, 117 via an edge or that is connected to an undesired link. It will be appreciated that a node connected to an undesired node by a link, whether or not that link also corresponds to an edge, may be selected as the first node 121. Undesired nodes 113, 117 and undesired links are defined as above when discussing the first graph operation 300. Returning to Figure 8A, this Figure illustrates such a first node 121. As can be seen, first node 121 is connected to undesired node 117 by a link.

Steps 403 to 409 generally correspond to steps 303 to 309 of the first graph operation 300, and are not repeated in detail again. At step 303, a destination node is selected as the second node 107. At step 405, one or more undesired nodes and/or undesired links are determined and assigned a high cost. It will be understood that this step 405 may in practice be performed prior to steps 401 and 403, in particular so as to enable the selection of a suitable first node 121. At step 407, a lowest cost path is determined between the first node 121 and the second node 107 (e.g., as shown in Figure 8B) and at step 409 the graph is updated to comprise the minimum cost path (e.g., as illustrated in Figure 9A and 9B). Additionally, as with the first graph operation 300, the second graph operation may also comprise defining one or more desired nodes and/or links and assigning these a low cost.

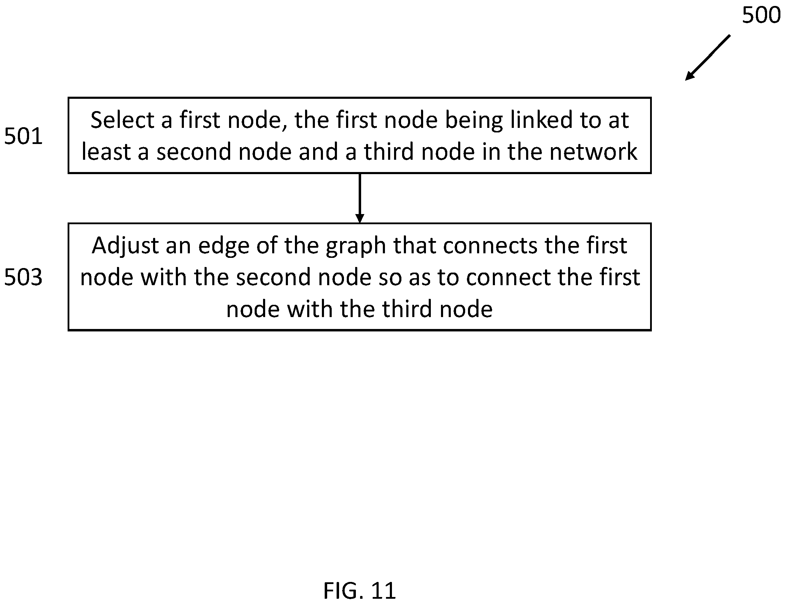

A third graph operation 500 is illustrated by the flowchart of Figure 11. The third graph operation 500 begins at step 501 by selecting a first node 113. The first node 113 is a node 101 being linked to at least a second node 117 and a third node 119. That is, the first node must be linked to at least two other nodes in the network 100 (though not necessarily connected to two other nodes via edges in the graph). Using Figures 8A and 8B as an example, it can be seen that node 113 is linked to both nodes 117 and 119 in network 100.

At step 503, the graph is adjusted by adjusting an edge of the graph that connects the first node 113 with the second node 117 so as to connect the first node 113 with the third node 119. That is, the edge between the first node 113 and the second node 117 is swapped and replaced with an edge between the first node 113 and the third node 119. Such an adjustment is illustrated in Figure 9A and 9B. In Figure 9A, it can be seen that there is an edge between the first node 113 and the second node 117, whereas in Figure 9B it can be seen that this edge no longer exists in the graph and instead the graph comprises an edge between the first node 113 and the third node 119. It will be appreciated that after this adjustment, the graph must still be a tree of the network, comprising all of the nodes 101 and having exactly one path between the source node 105 and ever other node 101. To meet this restriction, after adjusting the edge from between the first node 113 and the second node 117 to between the first node 113 and the third node 119, further adjustments of other edges between other nodes 101 in the graph may be required and also made at this stage.

It is noted that the third graph operation 500 does not take into account the cost of a path through the network 100 nor the SRGs 109. It has been found that, despite this, the third graph operation 500 is beneficial, particularly if applied in combination with other graph operations (notably the first graph operation 300 and the second graph operation 400), to introduce an element of randomness into the method 200 (especially if the first node 113 in the third graph operation 500 is randomly selected) which can prevent the method 200 from getting stuck in "dead ends".

The list of graph operations may comprise any of the first graph operation 300, the second graph operation 400, and the third graph operation 500. However, the method 200 has been found to be particularly effective if the list of graph operations comprises the first graph operation 300 and the second graph operation 400 (and especially if each of these are applied to at least one of the graphs at least once during application of method 200). The method 200 has been found to be even more effective if the list of graph operations comprises all of the first graph operation 300, the second graph operation 400, and the third graph operation 500 (and especially if each operation is applied to at least one of the graphs at least once during application of method 200).

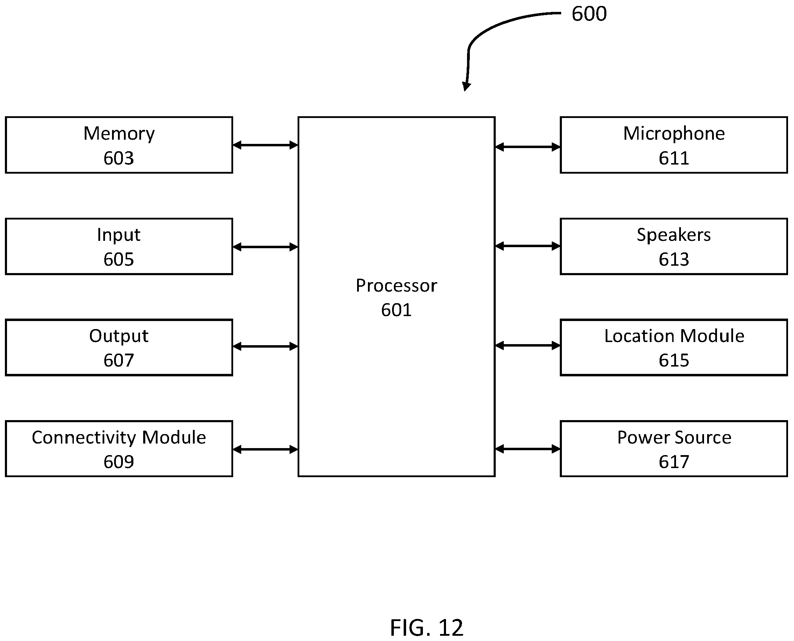

Figure 12 illustrates an exemplary computing system for performing method 200. Computing system 600 comprises processor 601 configured to carry out computational tasks, such as those described herein. Processor 601 may comprise a single processor or computer chip, multiple linked processors, parallel processors, multiple integrated circuits and the like. Processor 601 is connected to memory 601, which may include volatile and nonvolatile memory, such as RAM, EPROM, SSD, hard disk, and other forms of memory known in the art. Memory 601 may include a single memory block, or multiple memory blocks of the same or different types, and may store thereon operating instructions for device 600 (e.g., firmware, an operating system) and/or may store data or information received via a network or captured by the device 600.

Device 600 may comprise one or more inputs 605. Inputs may include, but are not limited to, touchscreens, physical and touch buttons, mouse, keyboard, stylus, microphones etc., and outputs may include, but are not limited to, one or more screens, haptic feedback systems, visual outputs such as lights, LEDs, speakers or audio outputs etc.

In order for device 600 to communicate with other device, a connectivity module 609 is provided. Connectivity module 609 is configured to facilitate connection and communication with other devices, and may be configured to provide wired and/or wireless connections. Connectivity module 609 may comprise the required hardware for a number of different types of connectivity, such as Wi-Fi, Bluetooth, cellular, ethernet, fibre optic and the like.

Device 600 may also comprise a location module 615 which may be configured to collect location data and/or determine location data.

Device 600 is powered by power source 617. This may comprise a wired power source, but preferably comprises a local power source such as a battery.

It will be appreciated that a "node", as discussed herein, may be any physical or virtual device that can receive a message from a network and send a message to another node on the network, such as a router. In particular, nodes may be devices that operate in layer 2 or layer 3 of the Open Systems Interconnection (OSI) model, also known as the data link layer and network layer respectively. Similarly, "links", as discussed herein, may be any physical or virtual device that is used to pass information from one node to another. In particular, nodes may comprise wires and cables, such as coper wires, ethernet cables, fibre optic cables, and the like.

It will also be understood by those skilled in the art that the apparatuses that embody aspects of the invention, such as the nodes, could be general purpose devices (or groups of devices) having software arranged to provide the functionality described herein. Furthermore, any or all of the software used to implement the invention can be contained on various storage mediums such as a floppy disc, CD-ROM, or magnetic tape so that the program(s) can be loaded onto one or more general purpose devices, or could be downloaded over a network.

## Claims

1. A method for determining resilient routing in a network comprising a plurality of nodes and a plurality of links between the nodes, the plurality of nodes and the plurality of links arranged in two or more Shared Risk Groups, SRGs, the plurality of nodes comprising exactly one source node and one or more destination nodes, the method comprising;
determining a first initial graph of the network;
determining a second initial graph of the network; and
iteratively adjusting the first initial graph and/or the second initial graph, by selecting a graph operation from a list of graph operations and applying the graph operation, so as to generate a first final graph and a second final graph such that, for each destination node, a path from the source node to the destination node in the first final graph and a path from the source node to the destination node in the second final graph comprise a minimum number of nodes and links within the same SRG;
wherein each graph comprises all of the nodes of the network and comprises edges along a subset of the links of the network such that, for each graph, there is exactly one path from the source node to any other node.

2. The method of claim 1, wherein each node and/or link has an associated cost.

3. The method of claim 2, wherein the list of graph operations comprises a first operation, the first operation comprising the following steps:
selecting a first node, wherein the first node is the source node;
selecting a second node, wherein the second node is a destination node;
defining one or more undesired nodes and/or links and assigning these a high cost, wherein an undesired node or link is a node or link respectively that is on a path from the source node to the destination node in the first graph that is in the same SRG as a node or a link on a path from the source node to the destination node in the second graph;
determining a minimum cost path between the first node and the second node through the network; and
updating the graph to comprise the minimum cost path.

4. The method of claim 3, wherein the first operation further comprises defining one or more desired nodes and/or links and assigning these a low cost.

5. The method of claim 3 or 4, wherein the second node is selected such that there is at least one node and/or link on a path from the source node to the second node in the first graph that is in the same SRG as a node or a link on a path from the source node to the second node in the second graph.

6. The method of any of claims 2 to 5, wherein the list of graph operations comprises a second operation, the second operation comprising the following steps:
selecting a first node, wherein the first node is a node that is connected to an undesired node via an edge or that is connected to an undesired link;
selecting a second node, wherein the second node is a destination node;
defining one or more undesired nodes and assigning these a high cost;
determining a minimum cost path between the first node and the second node through the network; and
updating the graph to comprise the minimum cost path;
wherein an undesired node or link is a node or link respectively on a path from the source node to the destination node in the first graph that is in the same SRG as a node or a link on a path from the source node to the destination node in the second graph.

7. The method of claim 6, wherein the second operation further comprises defining one or more desired nodes and/or links and assigning these a low cost.

8. The method of claim 6 or 7, wherein the first node and the second node are selected such that there is at least one node and/or link on a path from the source node to the second node in the first graph that is in the same SRG as a node or a link on a path from the source node to the second node in the second graph.

9. The method of any of claims 2 to 8, wherein the list of graph operations comprises a third operation, the third operation comprising:
selecting a first node, the first node being linked to at least a second node and a third node in the network; and
adjusting an edge of the graph that connects the first node with the second node so as to connect the first node with the third node.

10. The method of claim 9, wherein the first node is selected randomly.

11. The method of claims 9 or 10, when dependent on any of claims 6 to 8 and when also dependent on any of claims 3 to 5, wherein the list of graph operations comprises at least the first operation and the second operation; or
wherein the list of graph operations comprises at least the first operation, the second operation, and the third operation.

12. The method of claim 12, wherein each of the first operation, the second operation, and the third operation are performed at least once on either the first graph or the second graph.

13. A computing system configured to perform the method of any preceding claim.

14. A non-transitory medium that, when implemented on a computing system, causes the computing system to perform the method of any of claims 1 to 12.

15. A network comprising a plurality of nodes and a plurality of links between the nodes, the plurality of nodes and the plurality of links arranged in two or more Shared Risk Groups, SRGs, the plurality of nodes comprising a source node and two or more destination nodes, the network having resilient routing paths determined according to the method of any of claims 1 to 12.
